# EUROPEAN PATENT APPLICATION

(11) **EP 4 435 504 A1**
(43) Date of publication of application: **25.09.2024**
(21) Application number: 22895416.0
(22) Date of filing: 31.10.2022
(51) Int. Cl.: G02F 1/13, G02F 1/1333

(54) **LAMINATED GLASS AND LIQUID CRYSTAL DEVICE**

(30) Priority: 19.11.2021 JP 2021188367
(71) Applicant: Dai Nippon Printing Co., Ltd., Tokyo 162-8001 (JP)
(72) Inventor: SHIRAISHI Isamu, Tokyo 162-8001 (JP); IKEZAWA Takao, Tokyo 162-8001 (JP); TAMAKI Atsushi, Tokyo 162-8001 (JP)
(74) Representative: Müller-Boré & Partner Patentanwälte PartG mbB
(86) International application number: PCT/JP2022/040615
(87) International publication number: WO 2023/090133

(57) **Abstract**

Provided is a laminated glass capable of suppressing an appearance defect of a liquid crystal cell. A laminated glass 10 comprises: a first transparent substrate 41; a second transparent substrate 42 disposed oppositely to the first transparent substrate 41; a liquid crystal cell 20 provided between the first transparent substrate and the second transparent substrate; a first intermediate layer 31 composed of an OCR and provided between the first transparent substrate 41 and the liquid crystal cell 20; a second intermediate layer 32 composed of an OCA and provided between the second transparent substrate 42 and the liquid crystal cell 20; and a covering member 50 provided between the liquid crystal cell 20 and the first transparent substrate 41. The dimmer cell 20 has a region overlapping the covering member 50 and a region not overlapping the covering member 50.

## Description

### TECHNICAL FIELD

The present invention relates to a laminated glass and a liquid crystal device including the same.

### BACKGROUND ART

Conventionally, a light modulating member which is used for a window or the like and can be used for an electronic blind for controlling the transmittance of light, and a light modulating device including this light modulating member have been proposed. For example, it has been proposed to use a liquid crystal cell (light modulating cell) as a light modulating member, and to form a laminated glass by sandwiching the liquid crystal cell between a pair of glasses (see, for example, Patent Documents 1 and 2).

### Citation List

### Patent Document

Patent Document 1: Japanese Unexamined Patent Application, Publication No. 2017-187810
Patent Document 2: PCT International Publication No. WO2019/198748

### DISCLOSURE OF THE INVENTION

### Problems to be Solved by the Invention

When a laminated glass which sandwiches a liquid crystal cell is exposed to a high-temperature environment, a base material and a liquid crystal layer of the liquid crystal cell expand. As a result, a phenomenon that the liquid crystal sealed in the liquid crystal cell is locally unevenly distributed (hereinafter, also referred to as "liquid crystal pool") occurs in an irregular shape. Since the liquid crystal pool may be recognized as a defective appearance, it is desired to suppress the liquid crystal pool.

An object of the present invention is to provide a laminated glass and a liquid crystal device capable of suppressing defective appearance of a liquid crystal cell. Means for Solving the Problems

The present invention solves the problems by the following solutions. In order to facilitate understanding, the description will be given with reference symbols corresponding to embodiments of the present invention, but will not be limited thereto. The configuration described with the reference symbols may be modified as appropriate, and at least a part of the configuration may be replaced with other components. Embodiments of the present disclosure relate to the following [1] to [10].

[1] A first invention relates to a laminated glass (10), including: a first transparent substrate (41); a second transparent substrate (42) disposed opposite to the first transparent substrate; a liquid crystal cell (20) provided between the first transparent substrate and the second transparent substrate; a first intermediate layer (31) formed of an OCR and provided between the first transparent substrate and the liquid crystal cell; a second intermediate layer (32) formed of an OCA and provided between the second transparent substrate and the liquid crystal cell; and a covering member (50) provided between the liquid crystal cell and the first transparent substrate, in which the liquid crystal cell has a region overlapping with the covering member and a region not overlapping with the covering member in a plan view.
[2] A second invention relates to a laminated glass (10) including: a first transparent substrate (41); a second transparent substrate (42) disposed opposite to the first transparent substrate; a liquid crystal cell (20) provided between the first transparent substrate and the second transparent substrate and having an active area (A1) in which transmittance of light is controlled and an inactive area (A2) which is not used for control of transmittance of light; a first intermediate layer (31) provided between the first transparent substrate and the liquid crystal cell; a second intermediate layer (32) provided between the second transparent substrate and the liquid crystal cell; and a covering member (50) provided between the liquid crystal cell and the first transparent substrate, in which the covering member does not overlap with the active area of the liquid crystal cell in a plan view.
[3] In the laminated glass as described in [2], the first intermediate layer may be an OCR and the second intermediate layer may be an OCA.
[4] In the laminated glass as described in any one of [1] to [3], the covering member may include a film material (51) and a bonding layer (52).
[5] In the laminated glass as described in any one of [1] to [4], the covering member may be provided on a surface of the liquid crystal cell on a first transparent substrate side.
[6] In the laminated glass as described in any one of [1] to [4], the covering member may be provided on a surface of the first transparent substrate on a liquid crystal cell side.
[7] In the laminated glass as described in any one of [1] to [6], the thickness of the covering member may be 25% or more and 75% or less of the thickness of the first intermediate layer.
[8] In the laminated glass as described in any one of [1] to [7], a gap may be provided between an adjacent pair of covering members.
[9] In the laminated glass as described in any one of [1] to [8], the covering member may be transparent.
[10] A liquid crystal device (1) including: the laminated glass as described in any one of [1] to [9]; and a frame member (11) that holds an outer peripheral portion of the laminated glass.

### Effects of the Invention

According to the laminated glass and the liquid crystal device of the present invention, defective appearance of the liquid crystal cell can be suppressed.

### BRIEF DESCRIPTION OF THE DRAWINGS

FIG. 1 is a plan view of a light modulating device 1 as described in the first embodiment;
FIG. 2 is a cross-sectional view along the section line s1-s1 of FIG. 1;
FIG. 3 is an exploded perspective view showing a configuration of a laminated glass 10;
FIG. 4 is a plan view showing an arrangement of a light modulating cell 20 and covering members 50;
FIG. 5 is an exploded perspective view showing a configuration of a covering member 50;
FIGs. 6A to 6D are plan views showing various forms of covering member(s) 50 provided in the light modulating cell 20;
FIGs. 7E to 7H are plan views showing various forms of the covering member(s) 50 provided in the light modulating cell 20;
FIGs. 8A to 8E are diagrams illustrating a manufacturing process of the laminated glass 10 including the light modulating cell 20 as described in the first embodiment; and
FIG. 9 is a cross-sectional view of a light modulating device 1A as described in the second embodiment.

### PREFERRED MODE FOR CARRYING OUT THE INVENTION

Hereinafter, embodiments of the present invention will be described. Note that all of the drawings attached to the present specification are schematic diagrams, and the shape, the scale, the vertical and horizontal dimensional ratio, and the like of each part are changed or exaggerated from actual ones in consideration of ease of understanding and the like. In the drawings, hatching indicating cross sections of members is appropriately omitted.

In this specification and the like, terms which specify shapes, geometrical conditions, and degrees thereof, for example, "parallel", "orthogonal", and "direction", include a range which can be regarded as substantially parallel, substantially orthogonal, or the like, and a range which can be regarded as substantially the direction, in addition to the strict meaning of the terms. In this specification and the like, terms such as a plate, a sheet, and a film are used; however, these members are not restricted to a general classification according to thickness and can be replaced as appropriate. For example, an "OCA sheet" may be replaced with an "OCA film".

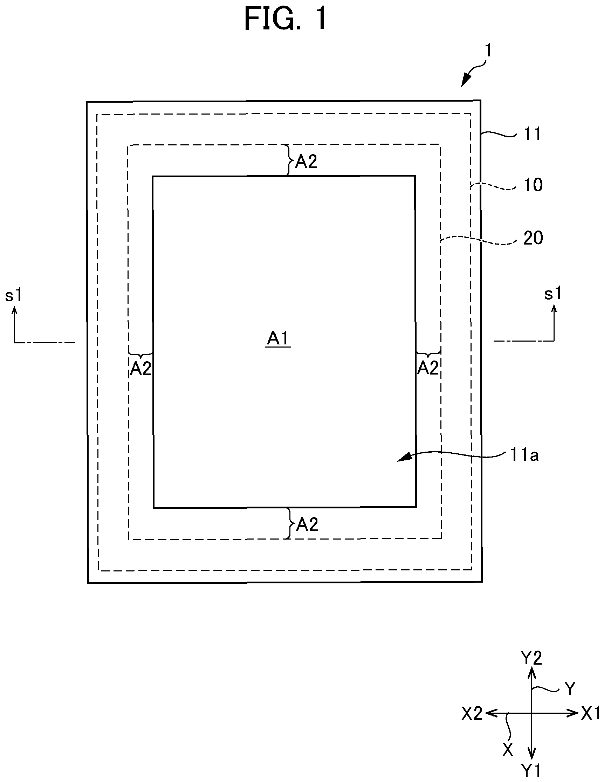

Further, in the drawings, coordinate systems of X-Y-Z orthogonal to each other are described as necessary. FIG. 1 (described later) as a reference of the coordinate system is a view of a laminated glass 10 viewed from a direction (normal direction) perpendicular to the plate surface. Both X axis and Y axis shown in FIG. 1 are axes parallel to the plate surface of the laminated glass 10. The laminated glass 10 shown in the present embodiment has a rectangular shape and a line parallel to one side thereof is the X axis. Among X directions along this X axis, one direction is defined as an X1 direction, and a direction opposite to the X1 direction is defined as an X2 direction. A line parallel to a side orthogonal to the X axis is a Y axis. Among Y directions along the Y axis, one direction is defined as a Y1 direction, and a direction opposite to the Y1 direction is defined as a Y2 direction. Further, a line orthogonal to the X-Y axes is a Z axis. Among Z directions along the Z axis, one direction is defined as a Z1 direction, and a direction opposite to the Z1 direction is defined as a Z2 direction. In the following description, the "in * direction" is also referred to as "* side". Note that numerical values, shapes, materials, and the like described in this specification are examples as the embodiments, and the present invention is not limited thereto, and may be appropriately selected and used.

The light modulating device of each embodiment described below can be applied to various technical fields in which control of light transmittance is required, and the application range thereof is not particularly limited. The light modulating device can be installed, for example, in a site where light controlling is required, such as a window glass of a building, a showcase, an indoor transparent partition, a window of a vehicle (for example, a front window, a side window, a rear window, a roof window, or the like), or a partition board inside the vehicle. Thereby, it is possible to control an amount of incident light into the inside of a building, a vehicle, or the like, or to control an amount of incident light into a predetermined area inside a building, a vehicle, or the like.

In addition, the light modulating device of each embodiment may be configured to have a three-dimensional shape having a curved surface shape. For example, the light modulating device may have a convex shape on one surface side. In addition, the light modulating device is not limited thereto, and for example, the surface shape may be a planar shape (for example, a flat plate shape). In each of the embodiments, description will be given on the assumption that the surface shape of the light modulating device is a planar shape (two-dimensional shape).

### EMBODIMENTS

### (First Embodiment)

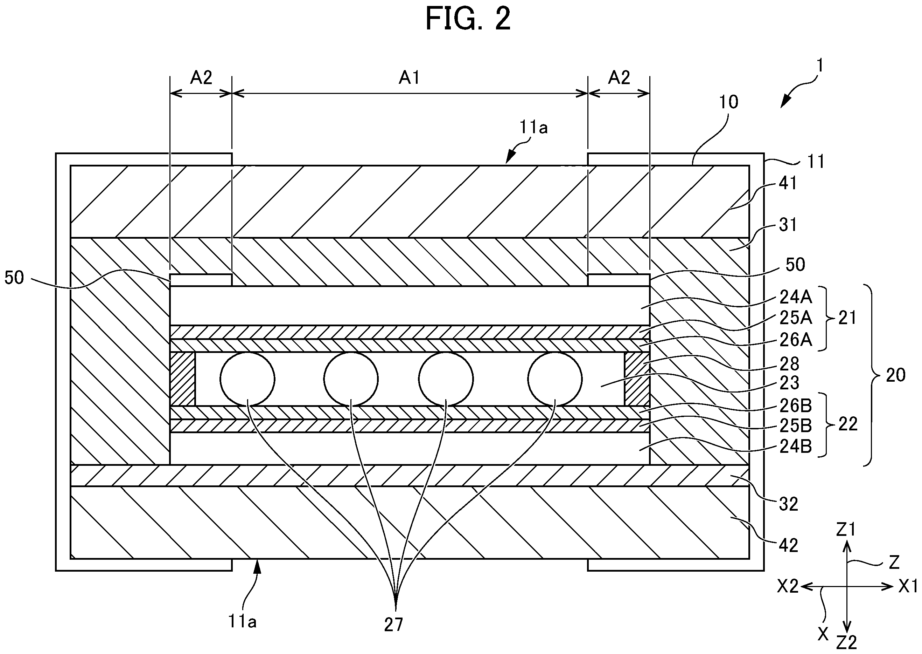

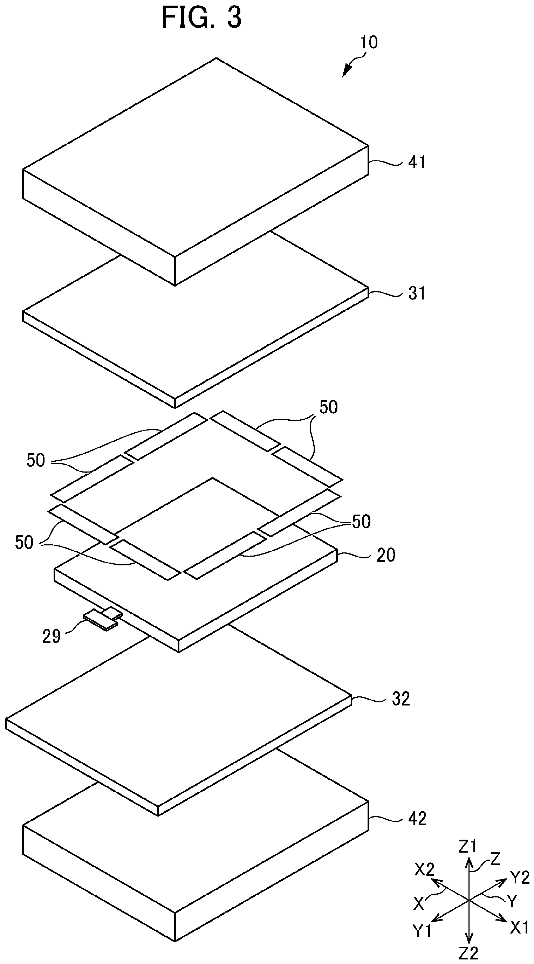

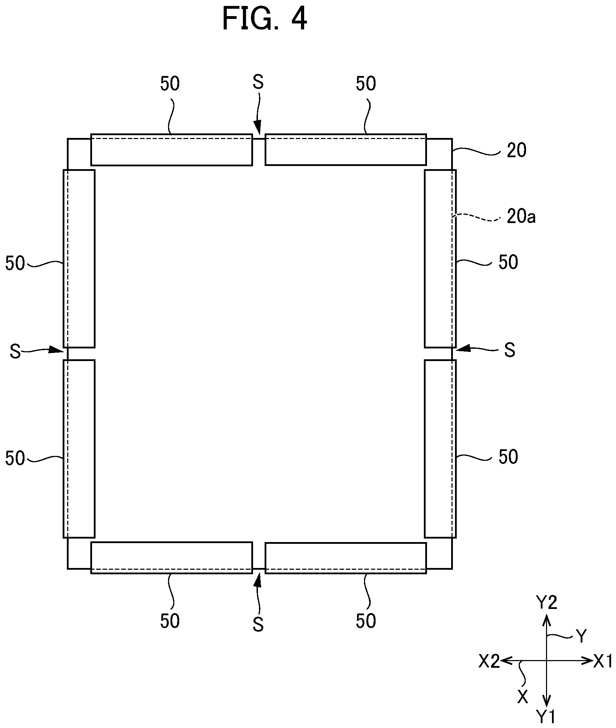

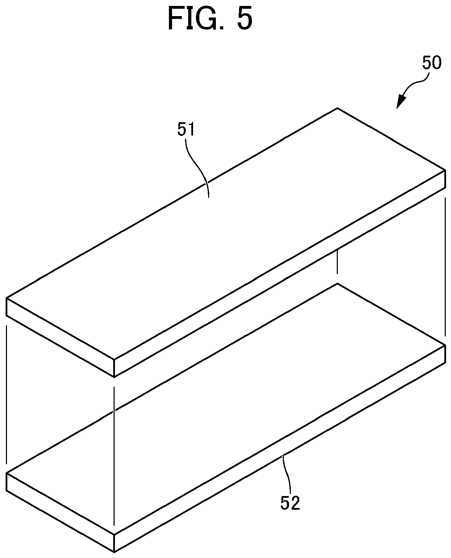

FIG. 1 is a plan view of a light modulating device 1 as described in a first embodiment. FIG. 2 is a cross-sectional view along the section line s1-s1 of FIG. 1. FIG. 3 is an exploded perspective view showing the configuration of a laminated glass 10. FIG. 4 is a plan view showing the arrangement of a light modulating cell 20 and covering members 50. FIG. 5 is an exploded perspective view showing the configuration of a covering member 50.

As shown in FIGs. 1 and 2, the light modulating device 1 of the first embodiment includes a laminated glass 10 and a frame member 11. The light modulating device 1 is a liquid crystal device in the present embodiment and the second embodiment, and is, for example, a device capable of controlling the light transmittance by applying a voltage. The frame member 11 is a member that covers the outer peripheral portion of the laminated glass 10 in a frame shape. The frame member 11 is provided with openings 11a. As shown in FIG. 2, the openings 11a are provided on both the front surface side (Z1 side) and the back surface side (Z2 side) of the light modulating device 1. The position, the shape and the size of each opening 11a coincide with those of an active area A1 (described later) of the light modulating cell 20 in the normal direction (Z direction) of the light modulating cell 20 described later. The frame member 11 has a function of protecting the outer peripheral portion of the laminated glass 10 and a function of making the laminated glass 10 attachable to a portion where light control is required. For example, when the laminated glass 10 is applied to a window glass of a building, the frame member 11 functions as a window frame. Note that the frame member 11 is not limited to having a shape that covers the outer peripheral portion of the laminated glass 10 in a frame shape, but may have a shape that partially covers the laminated glass 10. In the light modulating device, the laminated glass may not be provided with the frame member.

### (Laminated Glass)

The laminated glass 10 is a laminate including a light modulating cell 20 (described later) capable of controlling the transmittance of light by applying a voltage. As shown in FIGs. 2 and 3, the laminated glass 10 includes a first glass plate (first transparent substrate) 41, a second glass plate (second transparent substrate) 42, a first intermediate layer 31, a second intermediate layer 32, the light modulating cell 20, and covering members 50. Note that in FIG. 1, illustration of the covering members 50 are omitted.

The first glass plate 41 and the second glass plate 42 are members disposed opposite to each other as the front and back surfaces of the laminated glass 10, respectively. For example, when the first glass plate 41 is disposed on the front surface side (Z1 side) of the laminated glass 10, the second glass plate 42 is disposed on the back surface side (Z2 side) of the laminated glass 10. As the first glass plate 41 and the second glass plate 42, for example, highly transparent plate glass such as soda lime glass (blue plate glass), borosilicate glass (white plate glass), quartz glass, soda glass, and potash glass can be used.

Resin glass can be used as the first glass plate 41 and the second glass plate 42. As the resin glass, for example, a glass made of polycarbonate, acrylic, or the like can be used. In particular, polycarbonate is preferable from the viewpoint of heat resistance and strength. Further, the glass plate may be subjected to surface treatment such as hard coating, depending upon required characteristics such as scratch resistance. As the material of the glass plate, resin glass is more preferable than inorganic glass from the viewpoint of weight reduction. On the other hand, inorganic glass is more preferable than resin glass from the viewpoint of cost, heat resistance, scratch resistance, and the like.

The first intermediate layer 31, which is provided between the first glass plate 41 and the light modulating cell 20, bonds the first glass plate 41 and the light modulating cell 20 to each other. In the first embodiment, the first intermediate layer 31 is formed of an Optical Clear Resin (OCR). The OCR is a cured product obtained by curing a liquid curable composition containing a polymerizable compound for adhesive layer. Specifically, the OCR is obtained by applying a liquid resin of a mixture including a base resin such as an acrylic resin, a silicone resin, or a urethane resin, and an additive to an object, and then curing the resin using, for example, ultraviolet rays (UV). The first intermediate layer 31 made of OCR is optically transparent, and is preferably heat resistant up to at least about 120°C, moist heat resistant, and weather resistant as well.

The second intermediate layer 32, which is provided between the second glass plate 42 and the light modulating cell 20, bonds the second glass plate 42 and the light modulating cell 20 to each other. In the first embodiment, the second intermediate layer 32 is formed of an Optical Clear Adhesive (OCA). The OCA is, for example, a layer formed as follows. First, a liquid curable composition containing a polymerizable compound for adhesive layer is applied to a release film such as polyethylene terephthalate (PET), and this is cured using, for example, ultraviolet rays (UV) to obtain an OCA sheet. The curable adhesive layer composition may be an adhesive for optical use such as an acrylic resin, a silicone-based resin, or a urethane-based resin. After this OCA sheet is bonded to an object, the release film is peeled off to obtain a layer composed of the OCA. The second intermediate layer 32 made of OCA is optically transparent, and is preferably heat resistant up to at least about 120°C, moist heat resistant, and weather resistant as well.

### (Light Modulating Cell)

The light modulating cell 20, which is a liquid crystal cell in the present embodiment, is, for example, a film capable of controlling the transmittance of light by applying a voltage. The light modulating cell 20 is sandwiched between the first glass plate 41 and the second glass plate 42 via the intermediate layers (31, 32). The light modulating cell 20 includes a guest-host liquid crystal composition using a dichroic dye as a liquid crystal layer 23 (described later). As shown in FIG. 2, the light modulating cell 20 includes a first laminate 21, a second laminate 22, and a liquid crystal layer 23 disposed between the first laminate 21 and the second laminate 22. The thickness of the light modulating cell 20 is, for example, about 200 to 1,000 µm.

As shown in FIGs. 1 and 2, the light modulating cell 20 includes an active area A1 in which the transmittance of light is controlled, and an inactive area A2 adjacent to the active area A1. The inactive area A2 is an area that is not used for controlling the transmittance of light. In the present embodiment, as shown in FIG. 2, a region overlapping with the frame member 11 in the normal direction (Z direction) of the light modulating cell 20 is the inactive area A2. On the other hand, in the normal direction (Z direction) of the light modulating cell 20, a region that does not overlap with the frame member 11, in other words, a region that overlaps with the opening 11a of the frame member 11 is the active area A1. Note that the inactive area A2 of the present embodiment corresponds to an area which does not have the function of controlling the transmittance of light in the outer peripheral portion adjacent to the active area A1 of the light modulating cell 20 or an area that has the function of controlling the transmittance of light but is not used as the active area A1 in terms of design.

As shown in FIG. 2, in the light modulating cell 20, the first laminate 21 includes a first base material 24A, a first transparent electrode 25A, and a first alignment layer 26A. In the first laminate 21, the above-mentioned portions are laminated respectively in order of the first base material 24A, the first transparent electrode 25A, and the first alignment layer 26A from the front surface side (Z1 side) toward the back surface side (Z2 side). The second laminate 22 includes a second base material 24B, a second transparent electrode 25B, and a second alignment layer 26B. In the second laminate 22, the above-mentioned portions are laminated respectively in the order of the second base material 24B, the second transparent electrode 25B, and the second alignment layer 26B from the back surface side (Z2 side) toward the front surface side (Z1 side).

A plurality of bead spacers 27 are disposed between the first laminate 21 and the second laminate 22. The liquid crystal layer 23 is formed by filling liquid crystal in spaces among the plurality of bead spacers 27 between the first laminate 21 and the second laminate 22. The plurality of bead spacers 27 may be arranged irregularly or regularly. In the light modulating cell 20, by changing the voltage applied to the first transparent electrode 25A and the second transparent electrode 25B, which are provided in the first laminate 21 and the second laminate 22, respectively, the alignment of the liquid crystal material is changed due to the guest-host liquid crystal composition of the liquid crystal layer 23, whereby the transmittance of light is controlled.

The first base material 24A and the second base material 24B are each made of a transparent resin, and flexible films can be applied thereto. As the first base material 24A and the second base material 24B, it is desirable to use a transparent resin film having a small optical anisotropy and a transmittance of 80% or more at a wavelength in the visible region (380 nm or more and 800 nm or less). Examples of the material of the transparent resin film include:
an acetyl cellulose-based resin such as triacetyl cellulose (TAC) ;
polyester-based resins such as polyethylene terephthalate (PET) and polyethylene naphthalate (PEN);
polyolefin-based resins such as polyethylene (PE), polypropylene (PP), polystyrene, polymethylpentene, and EVA; vinyl-based resins such as polyvinyl chloride and polyvinylidene chloride;
an acrylic resin;
a polyurethane-based resin; and
resins such as a polysulfone (PSF), a polyethersulfone (PES), a polycarbonate (PC), a polyether, a polyether ketone (PEK), (meth)acrylonitrile, a cycloolefin polymer (COP), and a cycloolefin copolymer.

As the material of the transparent resin film, resins such as a polycarbonate, a cycloolefin polymer, and polyethylene terephthalate are particularly preferable. The thickness of the transparent resin film used as the first base material 24A and the second base material 24B may be appropriately selected within a range in which the transparent resin film has flexibility, though depending on the material thereof. Each of the first base material 24A and the second base material 24B may have a thickness of 50 um or more and 200 um or less. In the present embodiment, as an example of the first base material 24A and the second base material 24B, a polyethylene terephthalate film having a thickness of 125 um is used.

The first transparent electrode 25A and the second transparent electrode 25B are made of a transparent conductive film laminated on the first base material 24A and the second base material 24B (transparent resin films), respectively. As the transparent conductive film, various transparent electrode materials applicable to this type of transparent resin film can be applied, and examples thereof include an oxide-based transparent metal thin film having a total light transmittance of 50% or more. For example, a tin oxide-based material, an indium oxide-based material, and a zinc oxide-based material can be mentioned.

Examples of the tin oxide (SnO₂)-based material include tin oxide SnO₂ (Nesa), antimony tin oxide/antimony-doped tin oxide (ATO), and fluorine-doped tin oxide (FTO ) . Examples of the indium oxide (In₂O₃)-based material include indium oxide, indium tin oxide (ITO), and indium zinc oxide (IZO). Examples of the zinc oxide (ZnO)-based material include zinc oxide, aluminum-doped zinc oxide (AZO), and gallium-doped zinc oxide (GZO). In the first embodiment, the transparent conductive film constituting the first transparent electrode 25A and the second transparent electrode 25B is formed of ITO.

The bead spacers 27 are a member that defines the thickness (cell gap) of the liquid crystal layer 23. In the present embodiment, spherical bead spacers are used as the bead spacers 27. The diameter of a bead spacer 27 may be in the range of 1 um or more and 20 um or less and preferably 3 um or more and 15 um or less. A structure formed of an inorganic material, such as silica, a structure formed of an organic material, or a core-shell structure in which these materials are combined can be applied to the bead spacer 27. The bead spacer 27 may have a rod shape such as a columnar shape, an elliptical columnar shape, or a polygonal columnar shape, in addition to the spherical shape. The bead spacer 27 is manufactured with a transparent member, but a colored material may be applied as necessary to adjust the color.

In the present embodiment, the bead spacers 27 are disposed at the second laminate 22, but are not limited thereto, and may be disposed at both the first laminate 21 and the second laminate 22 or only at the first laminate 21. The bead spacers 27 are not necessarily provided. Instead of the bead spacers 27 or together with the bead spacers 27, columnar spacers may be used.

The first alignment layer 26A and the second alignment layer 26B are members for aligning the liquid crystal molecules included in the liquid crystal layer 23 in a desired direction. The first alignment layer 26A and the second alignment layer 26B are each formed of a photo-alignment layer. As a photo-alignment material applicable to the photo-alignment layer, various materials to which a photo-alignment technique is applicable can be widely applied. Examples thereof include a photolysis type, a photodimerization type, a photoisomerization type or the like. In the first embodiment, a photodimerization type material is used. Examples of the photodimerization type material include a polymer or the like having: cinnamate, coumarin, benzylidene phthalimidine, benzylidene acetophenone, diphenylacetylene, stilbazole, uracil, quinolinone, maleimide, or a cinnamylidene acetic acid derivative. Among them, a polymer having one of cinnamate or coumarin or both is preferably used from the viewpoint of good alignment control force.

Instead of the photo-alignment layer, a rubbing alignment layer may be used. The rubbing alignment layer may be without a rubbing treatment or an alignment layer may be prepared by performing a rubbing treatment and a subsequent shaping treatment to form micro linear asperities. In the present embodiment, the light modulating cell 20 includes the first alignment layer 26A and the second alignment layer 26B, but is not limited thereto, and it may be possible that neither the first alignment layer 26A nor the second alignment layer 26B is provided.

A guest-host liquid crystal composition and a dichroic dye composition can be widely applied to the liquid crystal layer 23. A chiral agent may be contained in the guest-host liquid crystal composition to cause the liquid crystal material to be aligned in a spiral shape in the thickness direction of the liquid crystal layer 23 when the liquid crystal material is aligned horizontally. A sealing material 28 having an annular shape or a frame shape in plan view is disposed between the first laminate 21 and the second laminate 22 so as to surround the liquid crystal layer 23. The first laminate 21 and the second laminate 22 are integrally held by the sealing material 28, and leakage of the liquid crystal material is prevented. As the sealing material 28, a thermosetting resin such as an epoxy resin or an acrylic resin, an ultraviolet curable resin, or the like can be used.

As the liquid crystal compound having no polymerizable functional group, a nematic liquid crystal compound, a smectic liquid crystal compound, or a cholesteric liquid crystal compound can be used for the liquid crystal layer 23. Examples of the nematic liquid crystal compound include a biphenyl-based compound, a terphenyl-based compound, a phenylcyclohexyl-based compound, a biphenylcyclohexyl-based compound, a phenylbicyclohexyl-based compound, a trifluoro-based compound, a phenyl benzoate-based compound, a phenyl cyclohexylbenzoate-based compound, a phenyl phenylbenzoate-based compound, a phenyl bicyclohexylcarboxylate-based compound, an azomethine-based compound, an azo-based compound, an azoxy-based compound, a stilbene-based compound, a tolan-based compound, an ester-based compound, a bicyclohexyl-based compound, a phenylpyrimidine-based compound, a biphenylpyrimidine-based compound, a pyrimidine-based compound, and a biphenylethyne-based compound.

Examples of the smectic liquid crystal compound include ferroelectric polymer liquid crystal compounds such as a polyacrylate-based compound, polymethacrylate-based compound, polychloroacrylate-based compound, polyoxirane-based compound, polysiloxane-based compound, and polyester-based compound. Examples of the cholesteric liquid crystal compound include cholesteryl linoleate, cholesteryl oleate, cellulose, a cellulose derivative, and a polypeptide.

Examples of the dichroic dye used in the guest-host system include dyes that are soluble in a liquid crystal and have high dichroic properties, such as an azo-based dye, an anthraquinone-based dye, a quinophthalone-based dye, a perylene-based dye, an indigo-based dye, a thioindigo-based dye, a merocyanine-based dye, a styryl-based dye, an azomethine-based dye, and a tetrazine-based dye.

The light modulating cell 20 is formed in a horizontal alignment layer where alignment control force relating to pretilt of the first alignment layer 26A and the second alignment layer 26B in a certain direction is set such that the guest-host liquid crystal composition during light shading is aligned when no electric field is applied, whereby the light modulating cell 20 is configured to be normally dark. Note that the light modulating cell 20 may be configured to be normally clear by setting the light modulating cell 20 to be in light shading when an electric field is applied. Here, being normally dark is a structure where the transmittance of light becomes minimum and a black screen is displayed when no voltage is applied to the liquid crystal. Being normally clear refers to a structure where the transmittance of light is maximized and the liquid crystal becomes transparent when no voltage is applied to the liquid crystal.

Further, since it is desirable that a scene or the like seen through the light modulating cell 20 is clearly visible during light transmission, it is desirable that the haze value during light transmission is low. Specifically, the haze value of the light modulating cell 20 during light transmission is preferably 30% or less, and more preferably 15% or less. In order to realize such a low haze value, it is desirable that a polymerizable compound is not contained in the liquid crystal mixture.

Although the light modulating cell 20 of the first embodiment includes the liquid crystal layer 23 of the guest-host type, the present invention is not limited thereto. The light modulating cell 20 may be configured to include the liquid crystal layer 23 of a Twisted Nematic (TN) type, a Vertical Alignment (VA) type, an In-Plane-Switching (IPS) type, or the like, where a dichroic dye composition is not used. When the light modulating cell 20 includes such a liquid crystal layer 23, the light modulating cell 20 can function as a light modulating film by further providing a linear polarization layer on each of the surfaces of the first base material 24A and the second base material
24B.

A flexible printed circuit board 29 (see FIG. 3) is provided to electrically connect the first transparent electrode 25A and the second transparent electrode 25B to the outside thereof. The flexible printed circuit board 29 is connected by being sandwiched between the first transparent electrode 25A and the second transparent electrode 25B in a region where the first transparent electrode 25A and the second transparent electrode 25B do not sandwich the liquid crystal layer 23, for example. Note that the flexible printed circuit board 29 may be configured not to be sandwiched between the first transparent electrode 25A and the second transparent electrode 25B, for example.

### (Covering Member)

The covering member(s) 50 is/are for adjusting the thickness of the first intermediate layer 31 which intervenes between the outer peripheral portion of the light modulating cell 20 and the first glass plate 41. In the present embodiment, the outer peripheral portion of the light modulating cell 20 refers to the inactive area A2 or a region including a part of the inactive area A2. As shown in FIG. 2, the covering members 50 of the first embodiment are disposed on the surface (Z1 side) of the light modulating cell 20. As shown in FIGs. 3 and 4, the covering members 50 are formed in an elongated rectangular shape. In the present embodiment, two covering members 50 are provided on each side of the light modulating cell 20. As shown in FIG. 4, a gap portion (gap) S is provided between an adjacent pair of covering members 50. By providing the gap portion S between the adjacent pair of covering members 50, it is possible to discharge excess air from the gap portion S when the first intermediate layer 31 (OCR) is formed between the first glass plate 41 and the light modulating cell 20. Since the covering member(s) 50 is/are configured as described above, the light modulating cell 20 has a region overlapping with the covering member 50 and a region not overlapping with the covering member 50.

The covering members 50 may not necessarily be provided as shown in FIG. 4, and may alternatively be in a continuous configuration along one side of the light modulating cell 20 as described later. In FIG. 4, the outer edge of each covering member 50 protrudes outward from an outer peripheral edge 20a of the light modulating cell 20, but the outer edge may be disposed so as to coincide with the outer peripheral edge 20a of the light modulating cell 20.

As shown in FIG. 5, a covering member 50 includes a film material 51 and a bonding layer 52. The film material 51 is a member disposed on a first glass plate 41 side of the covering member 50. As the film material 51, for example, other than polyethylene terephthalate (PET), the same material as the first base material 24A and the second base material 24B described above can be used. The covering member 50 may be transparent or opaque. However, since the following effects can be obtained by making the covering member 50 transparent, it is more desirable that the covering member 50 be transparent. Examples of effects of making the covering member 50 transparent include that it is possible to minimize the probability of overlooking defects with respect to a cell peripheral portion where the defects may occur in the light modulating cell in the middle of manufacturing, if the covering member 50 is transparent. In order to obtain such effects, the degree of transparency of the covering member 50, that is, the transmittance of light is preferably 50% or more and more preferably 80% or more. The above-described transmittance is a value in a visible light region (400 nm to 800 nm) and is measured by a spectrophotometer. The thickness of the covering member 50 is preferably 250 or more and 95% or less, and more preferably 40% or more and 90% or less of the thickness of the first intermediate layer 31. The thickness of the film material 51 is, for example, preferably 50 to 250 um and more preferably 100 to 250 µm.

The bonding layer 52 is a layer for bonding the film material 51 and the light modulating cell 20. The bonding layer 52 is disposed on a light modulating cell 20 side of the covering member 50. As the bonding layer 52, for example, an OCA, an OCR, or the like can be used. The thickness of the bonding layer 52 is, for example, 15 to 250 um. The bonding layer 52 may be omitted from the covering member 50. As shown in FIG. 2, the covering members 50 are provided in a region that does not overlap with the active area A1 of the light modulating cell 20 in a plan view. The covering members 50 of the present embodiment are provided so as to cover substantially the entirety of the inactive area A2 of the light modulating cell 20 except for gap portions S. Note that when a covering member 50 is provided at one location, the above-mentioned feature of the entire coverage may be applied to the area of the covering member 50 at the one location.

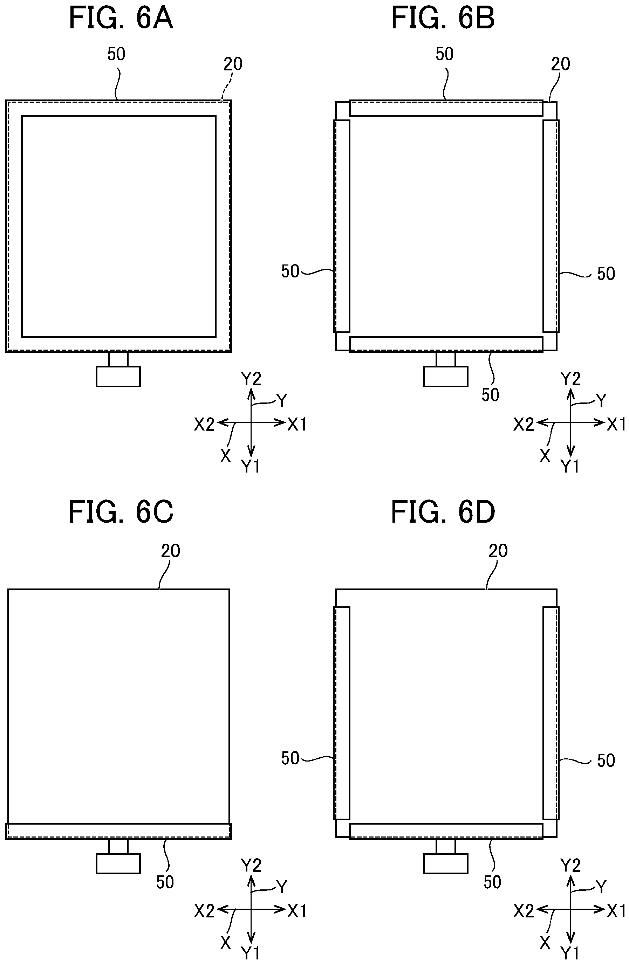

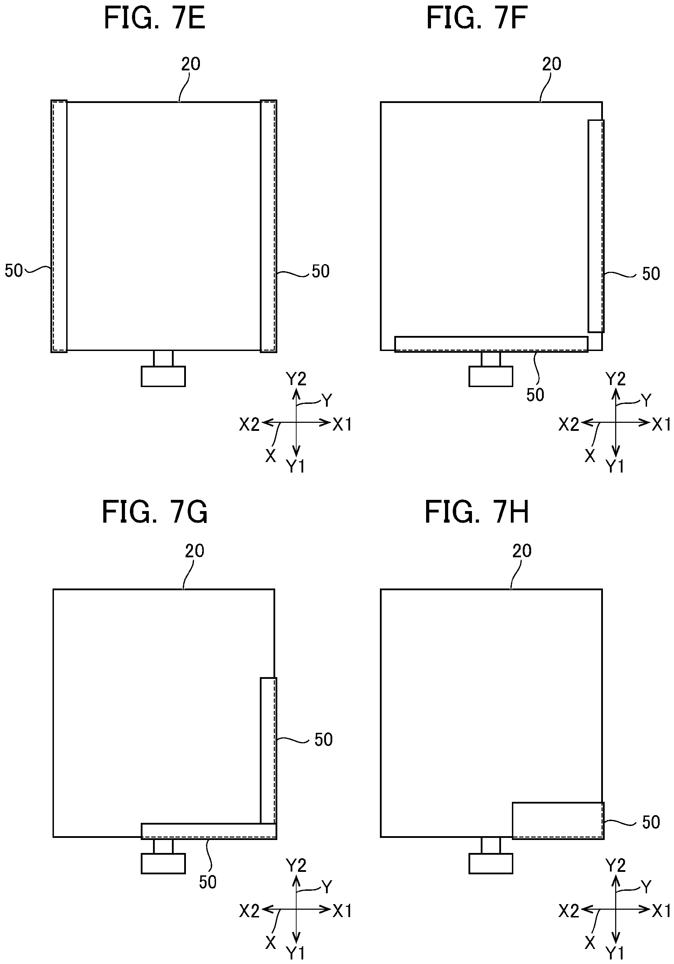

Next, other arrangement examples of the covering member(s) 50 will be described. FIGs. 6A to 6D and FIGs. 7E to 7H are plan views showing various forms of the covering member(s) 50 provided in the light modulating cell 20. FIG. 6A shows a form where a covering member 50 formed in a frame shape is provided on the outer peripheral portion of the light modulating cell 20. FIG. 6B shows a form where covering members 50 are provided so as to cover four sides of the light modulating cell 20. FIG. 6C shows a form where a covering member 50 is provided so as to cover one side of the light modulating cell 20. In FIG. 6C, the covering member 50 is provided on one side on a Y1 side of the light modulating cell 20, but the covering member 50 may be provided alternatively on one side on a Y2 side, an X1 side, or an X2 side. FIG. 6D shows a form where covering members 50 are provided so as to cover three sides of the light modulating cell 20. FIG. 6D illustrates a form where the covering members 50 are provided on three sides of the light modulating cell 20 except for the Y2 side, but a form where the covering members 50 are provided on three sides of the light modulating cell 20 except for the Y1 side, the X1 side, or the X2 side may be alternatively employed.

FIG. 7E shows a form where covering members 50 are provided so as to cover two opposing sides of the light modulating cell 20. FIG. 7E shows a form where the covering members 50 are provided on two sides of the light modulating cell 20 on the X1 side and the X2 side, but a form where the covering members 50 are provided on two sides of the light modulating cell 20 on the Y1 side and the Y2 side may be alternatively employed.

FIG. 7F illustrates a form where covering members 50 are provided so as to cover two adjacent sides of the light modulating cell 20. FIG. 7F illustrates a form where the covering members 50 are provided on two sides of the light modulating cell 20 on the X1 side and the Y1 side, but the covering members 50 may alternatively be provided at any positions as long as they are provided on two adjacent sides of the light modulating cell 20. For example, the covering members 50 may be provided on two sides of the light modulating cell 20 on the X2 side and the Y2 side.

FIG. 7G illustrates a form where covering members 50 each having a length shorter than one side of the light modulating cell 20 are provided on two adjacent sides of the light modulating cell 20. In FIG. 7G, the covering members 50 are provided on two sides of the light modulating cell 20 on the X1 side and the Y1 side, but the covering members 50 may be provided alternatively at any positions as long as they are provided on two adjacent sides of the light modulating cell 20. For example, the covering members 50 may be provided on two sides of the light modulating cell 20 on the X2 side and the Y2 side. In addition, the length of each covering member 50 provided at each position may be different from that in FIG. 7G.

FIG. 7H illustrates a form where a covering member 50 having a length in the X direction shorter than that of one side of the light modulating cell 20 and having a wide width in the Y direction is provided on one side of the light modulating cell 20. In FIG. 7H, the covering member 50 is provided on the Y1 side and the X1 side of the light modulating cell 20, but the covering member 50 may be provided alternatively at any position on one side of the light modulating cell 20 as long as it is shorter than one side of the light modulating cell 20 and has the wide width. For example, the covering member 50 having the same shape as that of FIG. 7H may be provided on the Y1 side and the X2 side of the light modulating cell 20.

In a case where the light modulating cell 20 (light modulating device 1) is vertically placed in each of the above-described embodiments, for example, a case where the light modulating cell 20 is installed so that the Y2 side is oriented upward, while the Y direction is set vertical in the light modulating cell 20, a liquid crystal pool is likely to occur on the lower side (Y1 side) of the active area A1 in the light modulating cell 20. Accordingly, in the case where the light modulating cell 20 is vertically placed in the above-described direction, it is possible to make the liquid crystal pool generated on the Y1 side of the active area A1 less conspicuous by disposing the covering member 50 on the lower side (Y1 side) of the light modulating cell 20. In the case where the light modulating cell 20 is vertically placed in the above-described direction, it is preferable that the covering member(s) 50 be disposed in, for example, the positions shown in FIGs. 6C, 6D, and 7F to 7H.

### (Method for manufacturing Laminated Glass)

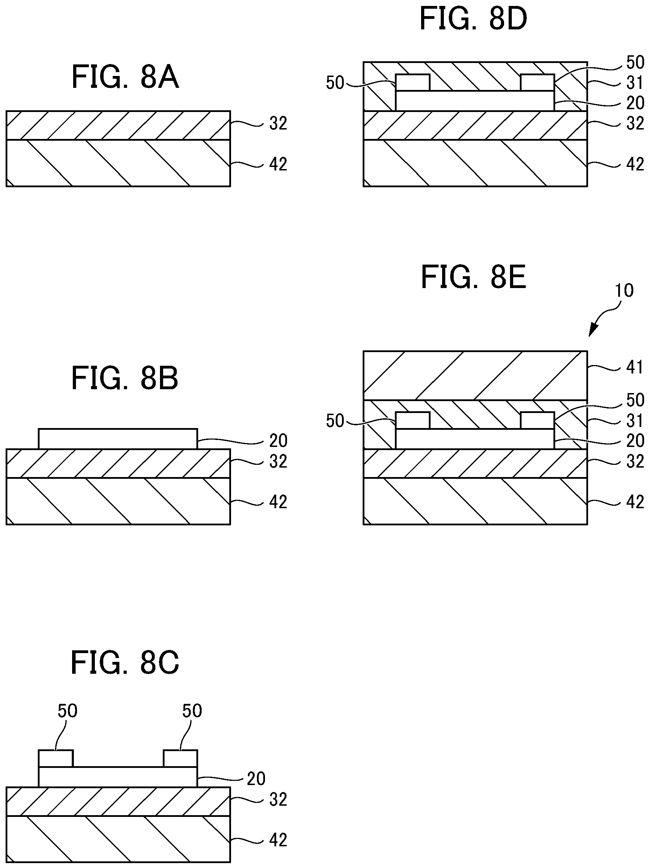

Next, a method of manufacturing a laminated glass 10 including a light modulating cell 20 as described in the first embodiment will be described with reference to FIG. 8. FIGs. 8A to 8E are diagrams illustrating the manufacturing process of the laminated glass 10 including the light modulating cell 20 as described in the first embodiment.

First, as shown in FIG. 8A, a second glass plate 42 is placed on a workbench (not shown), and a second intermediate layer 32 made of OCA is laminated on the second glass plate 42. Next, as shown in FIG. 8B, the light modulating cell 20 is laminated on the second intermediate layer 32. Next, as shown in FIG. 8C, covering members 50 are disposed on the outer peripheral portion of the light modulating cell 20 (for example, the form of FIG. 3). The covering members 50 are laminated so that a bonding layer 52 is oriented to the light modulating cell 20 and a film material 51 is oriented in reverse with respect to the light modulating cell 20. Next, as shown in FIG. 8D, an uncured OCR to be the first intermediate layer 31 is applied on the laminate obtained in FIG. 8C. The OCR is applied with a coating nozzle (not shown) such as a dispenser or a slit coater.

Next, as shown in FIG. 8E, the first glass plate 41 is bonded onto the first intermediate layer 31. Since the first intermediate layer 31 is an OCR containing a pressure insensitive bonding component, it can be bonded with atmospheric bonding or vacuum bonding without pressurizing the first glass plate 41. Thereafter, the laminate is irradiated with ultraviolet rays (UV) to cure the OCR. When the OCR cures, the laminated glass 10 is completed, where the second glass plate 42, the second intermediate layer 32, the light modulating cell 20, the covering member(s) 50, the first intermediate layer 31, and the first glass plate 41 are laminated in this order. The light modulating device 1 can be obtained by attaching a frame member 11 to the outer periphery of the laminated glass 10 thus completed (see FIGs. 1 and 2).

Next, functions and effects of the covering member 50 provided in the light modulating cell 20 will be described. As described above, when a laminated glass using a general liquid crystal cell is exposed to a high-temperature environment, a base material or a liquid crystal layer of the liquid crystal cell expands and a liquid crystal pool easily occurs accordingly. On the other hand, the light modulating cell 20 of the present embodiment has a region overlapping with the covering member 50 and a region not overlapping with the covering member 50. Consequently, in the laminated glass 10 sandwiching the light modulating cell 20, the thickness of the first intermediate layer 31 is thinner in the region where the covering member 50 is disposed than in the region where the covering member 50 is not disposed. Accordingly, during the production of the laminated glass 10, the OCR in contact with the light modulating cell 20 in the region not overlapping with the covering member 50 more significantly expands than the OCR in contact with the light modulating cell 20 in the region overlapping with the covering member 50. Due to the expansion, the OCR in contact with the light modulating cell 20 in the region not overlapping with the covering member 50 more strongly presses the light modulating cell 20 than the OCR in contact with the light modulating cell 20 in the region overlapping with the covering member 50. As a result, a part of the liquid crystal lying in the region not overlapping with the covering member 50 emigrates to the region overlapping with the covering member 50, that is, the region where the expansion of the OCR is small. Accordingly, in the light modulating cell 20, by disposing the covering member 50 in a region where the liquid crystal is desired to emigrate, it is possible to selectively collect a part of the liquid crystal filled in the cell into this region. As described above, in the laminated glass 10 of the present embodiment, it is possible to control the region where the liquid crystal pool is generated by disposing the covering member 50 in the region where the liquid crystal is desired to selectively collect in the light modulating cell 20. Accordingly, in the light modulating cell 20, by arranging the covering member 50 in a region adjacent to a region in which a liquid crystal pool is not desired to occur, it is possible to suppress defective appearance of the light modulating cell 20 in this region.

In the laminated glass 10 of the present embodiment, since each covering member 50 is disposed along the outer peripheral portion of the light modulating cell 20 as shown in FIG. 4, the thickness of the first intermediate layer 31 is thinner in the region where covering members 50 are disposed than in other regions (for example, the active area A1). Consequently, when the OCR to become the first intermediate layer 31 is cured during the manufacture of the laminated glass 10, the expansion of the OCR in the outer peripheral portion of the light modulating cell 20 is relatively smaller than the expansion of the OCR in the central portion. Accordingly, at the time of curing the OCR, the OCR in contact with the central portion of the light modulating cell 20 more significantly expands than the outer peripheral portion and more strongly presses the central portion of the light modulating cell 20. Accordingly, a part of the liquid crystal lying in the central portion of the light modulating cell 20 moves toward the outer peripheral portion where the expansion of the OCR is small. That is, a part of the liquid crystal lying in the central portion of the light modulating cell 20 (the laminated glass 10) results in being gathered into the region of the inactive area A2 in which the covering member 50 is disposed at the time of manufacturing. As a result, when the manufactured light modulating cell 20 (the laminated glass 10) is exposed to a high-temperature environment, even if expansion occurs in the base material or the liquid crystal layer, the liquid crystal pool is less likely to occur in the central portion of the light modulating cell 20, and thus it is possible to suppress deterioration in appearance or light control performance mainly in the active area A1.

In the laminated glass 10 of the first embodiment, the covering member 50 is provided on the light modulating cell 20 side. Accordingly, in the step shown in FIG. 8C, it is possible to facilitate the operation of disposing the covering member 50 on the outer peripheral portion of the light modulating cell 20. In the laminated glass 10 of the first embodiment, the covering member 50 includes the film material 51 and the bonding layer 52 (see FIG. 5). Accordingly, in the step shown in FIG. 8D, when the OCR is applied on the light modulating cell 20, the position of the covering member 50 disposed on the outer peripheral portion of the light modulating cell 20 can be made less likely to shift.

In the laminated glass 10 of the first embodiment, as shown in FIG. 4, two covering members 50 are provided on each side of the light modulating cell 20, and a gap portion S is provided between an adjacent pair of covering members 50. Accordingly, in the step shown in FIG. 8E, when the first intermediate layer 31 is formed by sandwiching an uncured OCR between the first glass plate 41 and the light modulating cell 20, excess air can be discharged from the gap portion S.

### (Second Embodiment)

A light modulating device 1A of a second embodiment differs from that of the first embodiment in the position where covering member(s) 50 is/are disposed. Other configurations of the light modulating device 1A of the second embodiment are the same as those of the first embodiment. Accordingly, in the description of the second embodiment, only a cross-sectional view of the light modulating device 1A is illustrated, and other drawings are omitted. Further, in the description of the second embodiment and the drawings, members and the like equivalent to those of the first embodiment are denoted by the same reference symbols as those of the first embodiment, and redundant description is omitted.

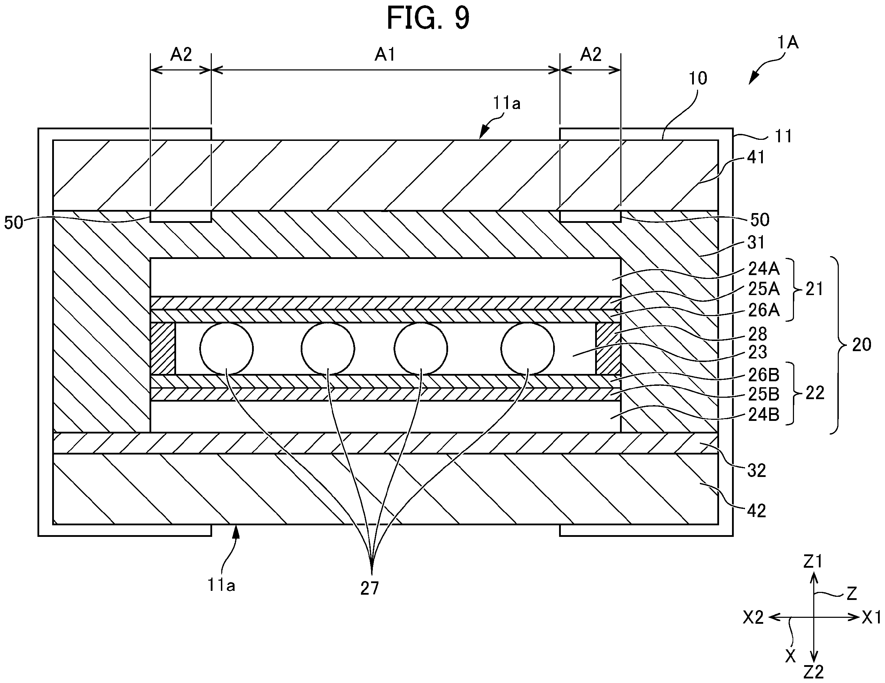

FIG. 9 is a cross-sectional view of a light modulating device 1A as described in the second embodiment. FIG. 9 corresponds to the cross-sectional view (FIG. 2) of the light modulating device 1 of the first embodiment. As shown in FIG. 9, in the light modulating device 1A of the second embodiment, covering member(s) 50 is/are disposed on the surface (Z2 side) of a first glass plate 41. In each covering member 50 of the second embodiment, a film material 51 (see FIG. 5) is disposed on a light modulating cell 20 side. A bonding layer 52 (see FIG. 5) is disposed on a first glass plate 41 side. In the second embodiment, the region in which the covering member(s) 50 is/are disposed is the same as that in the first embodiment. That is, the covering member(s) 50 is/are provided in a region(s) that does/do not overlap with an active area A1 of the light modulating cell 20 in plan view. In the light modulating device 1A of the second embodiment, as the arrangement of the covering member(s) 50, for example, FIG. 4, FIGs. 6A to 6D, and FIGs. 7E to 7H of the first embodiment can be applied.

Also in the light modulating device 1A of the second embodiment, by the covering member(s) 50 disposed along the outer peripheral portion of the light modulating cell 20, a part of the liquid crystal lying in the central portion of the light modulating cell 20 can be gathered into the region of an inactive area A2 at the time of manufacturing. Consequently, according to the light modulating device 1A of the second embodiment, when the light modulating cell 20 (a laminated glass 10) is exposed to a high-temperature environment, it is possible to suppress an appearance defect and a decrease in light control performance in the active area A1.

Although the embodiments of the present invention have been described above, the present invention is not limited to the above-described embodiments, and various modifications and changes such as those described below can be made and are also included in the technical scope of the present invention. In addition, the effects described in the embodiments merely enumerate the most preferable effects generated from the present invention, and are not limited to those described in the embodiments. Although the above-described embodiments and modifications described below can be appropriately combined and used, detailed descriptions thereof will be omitted.

### (Variations)

In the embodiments, an example in which the covering member 50 has an elongated rectangular shape has been described, but the present invention is not limited thereto. The shape of the covering member 50 in plan view may be, for example, a square or a rectangle, or may be a parallelogram, a trapezoid, a circle, an ellipse, or the like. That is, the shape of the covering member 50 in plan view can be appropriately changed.

In the embodiments, an example in which the light modulating cell 20 is rectangular in plan view has been described, but the present invention is not limited thereto. The shape of the light modulating cell 20 may be, for example, a square in plan view, or may be a parallelogram, a trapezoid, or the like. That is, the shape of the light modulating cell 20 in plan view can be appropriately changed. The same applies to the laminated glass 10 including the light modulating cell 20, and the shape in a plan view is not limited to a rectangle and can be appropriately changed.

In the embodiments, a configuration in which the covering member(s) 50 is /are provided on the light modulating cell 20 side (first embodiment) and a configuration in which the covering member is provided on the first glass plate 41 side (second embodiment) have been described, but the present invention is not limited thereto. Covering members 50 may be provided on both light modulating cell 20 side and first glass plate 41 side, while interposing a first intermediate layer 31 (OCR) therebetween. In this configuration, one covering member 50 provided on the light modulating cell 20 side and another covering member 50 provided on the first glass plate 41 side may be configured to be the same or different in shape and/or arrangement.

In the embodiments, the configuration in which only the light modulating cell 20 is stacked between the first intermediate layer 31 and the second intermediate layer 32 of the laminated glass 10 has been described, but the present invention is not limited thereto. For example, a functional film such as a UV cut film may be laminated on one side or both sides of a light modulating cell 20. In the embodiments, an example in which the first intermediate layer 31 of the laminated glass 10 is formed of an OCR and the second intermediate layer 32 is formed of an OCA has been described, but the present invention is not limited thereto. Both the first intermediate layer 31 and the second intermediate layer 32 may be formed of an OCR.

### EXPLANATION OF REFERENCE NUMERALS

1, 1A Light modulating device
10 Laminated glass
11 Frame member
20 Light modulating cell
31 First intermediate layer
32 Second intermediate layer
41 First glass plate
42 Second glass plate
50 Covering member
51 Film material
52 Bonding layer
S Gap portion
A1 Active area
A2 Inactive area

## Claims

1. A laminated glass, comprising:
a first transparent substrate;
a second transparent substrate disposed opposite to the first transparent substrate;
a liquid crystal cell provided between the first transparent substrate and the second transparent substrate;
a first intermediate layer formed of an OCR and provided between the first transparent substrate and the liquid crystal cell;
a second intermediate layer formed of an OCA and provided between the second transparent substrate and the liquid crystal cell; and
a covering member provided between the liquid crystal cell and the first transparent substrate,
wherein the liquid crystal cell has a region overlapping with the covering member and a region not overlapping with the covering member in a plan view.

2. A laminated glass comprising:
a first transparent substrate;
a second transparent substrate disposed opposite to the first transparent substrate;
a liquid crystal cell provided between the first transparent substrate and the second transparent substrate and having an active area in which transmittance of light is controlled and an inactive area which is not used for control of transmittance of light;
a first intermediate layer provided between the first transparent substrate and the liquid crystal cell;
a second intermediate layer provided between the second transparent substrate and the liquid crystal cell; and
a covering member provided between the liquid crystal cell and the first transparent substrate,
wherein the covering member does not overlap with the active area of the liquid crystal cell in a plan view.

3. The laminated glass according to claim 2, wherein
the first intermediate layer is an OCR, and
the second intermediate layer is an OCA.

4. The laminated glass according to any one of claims 1 to 3,
wherein the covering member comprises a film material and a bonding layer.

5. The laminated glass according to any one of claims 1 to 3,
wherein the covering member is provided on a surface of the liquid crystal cell on a first transparent substrate side.

6. The laminated glass according to any one of claims 1 to 3,
wherein the covering member is provided on a surface of the first transparent substrate on a liquid crystal cell side.

7. The laminated glass according to any one of claims 1 to 3,
wherein a thickness of the covering member is 25% or more and 75% or less of a thickness of the first intermediate layer.

8. The laminated glass according to any one of claims 1 to 3,
wherein a gap is provided between an adjacent pair of covering members.

9. The laminated glass according to any one of claims 1 to 3,
wherein the covering member is transparent.

10. A liquid crystal device comprising:
the laminated glass according to any one of claims 1 to 3; and
a frame member that holds an outer peripheral portion of the laminated glass.
